# EUROPEAN PATENT SPECIFICATION

(11) **EP 0 492 545 B1**
(45) Date of publication and mention of the grant of the patent: **25.03.1998**
(21) Application number: 91122017.6
(22) Date of filing: 20.12.1991
(51) Int. Cl.: B05D 1/18, C03C 17/30

(54) **Transparent substrate with monomolecular film thereon and method of manufacturing the same**
Transparentes Substrat mit aufgebrachtem monomolekularem Film und Verfahren zu seiner Herstellung
Substrat transparent avec film unimoléculaire sur cela et procédé de préparation de celui-ci

(30) Priority: 25.12.1990 JP 405755/90; 06.02.1991 JP 38135/91
(43) Date of publication of application: 01.07.1992
(73) Proprietor: MATSUSHITA ELECTRIC INDUSTRIAL CO., LTD., Kadoma-shi, Osaka-fu, 571 (JP)
(72) Inventor: Ogawa, Kazufumi, Hirakata-shi 573, Osaka (JP); Mino, Norihisa, Settsu-shi 566, Osaka (JP); Soga, Mamoru, Osaka-shi 543 (JP)
(74) Representative: Grünecker, Kinkeldey, Stockmair & Schwanhäusser Anwaltssozietät

(56) References cited:
- EP-A- 0 282 188
- US-A- 4 539 061
- The Journal of the Surface Finishing Society of Japan vol.47, no.10, 1996

## Description

This invention relates to a transparent article and, more particularly, to a transparent article required to be hydrophobic, oil-phobic and/or contamination-free such as motor vehicle and building window glasses, windowshield, optical lenses and glass lenses.

In order to prevent contamination of a transparent substrate such as glass, it has been proposed to make the surface as smooth as possible or to coat the surface with a protective film such as a fluorine-based coating film. Further, to prevent fogging of the transparent substrate surface, a hydrophilic polymer is coated, or a heater is installed in or onto a transparent substrate.

Where the contamination of a transparent substrate stems from water drops, an antifogging effect can be obtained by installing a heater, for instance. In this case, however, a power source for the heater is necessary. In addition, a heater which is buried in or installed on the surface of the transparent substrate is liable to reduce the transparency thereof. Coating with e.g. a hydrophilic polymer is comparatively simple. However, only a tentative effect is achieved, and the hydrophilic polymer may be easily peeled off by rubbing the transparent substrate surface.

Where contamination stems from other causes than water drops, the above methods are substantially meaningless. Accordingly, it has been proposed to coat the transparent substrate surface with a protective film such as a fluorine-based coating film. However, the adhesion between the transparent substrate and the fluorine-based protective film is weak, and the film is readily separated. In addition, the fluorine-based protective film causes fogging of the transparent substrate due to its opaqueness. There are other protective film materials which can improve the transparency and adhesion. However, these materials cannot permit ready wiping-out of contaminants. Accordingly, it is a practical method to make the surface of the transparent substrate as smooth as possible. Limitations, however, are imposed on the smoothness. After all, there has never been a transparent substrate treated to be contamination free, hydrophobic and/or oil-phobic.

US-A-4539061 discloses a process for producing built-up films on a substrate (e.g. glass) by the step-wise adsorption of individual monolayers. The monolayers may be formed by using e.g. rod-like molecules containing elongated non-polar (hydrophobic) moieties, such as derivatives of long chain saturated and unsaturated hydrocarbons and fluorocarbons, steroids and other elongated polycyclic compounds.

EP-A-0282188 discloses a recording medium and a method of producing same. The recording medium comprises a base body, a recording layer formed on the base body, and a protective layer formed on the recording layer. The protective layer is made from a silane surface active agent containing fluorine.

An object of the invention is to provide a highly hydrophobic and contamination-free transparent article, which is free from attachment of contaminants or capable of being ready freed of contaminants, if attached.

Attempting to attain this object, the invention provides a
transparent, hydrophobic and oil-phobic article comprising a transparent substrate and at least one covalently bonded monomolecular transparent film formed as an outermost surface layer either directly or indirectly on at least one surface of the transparent substrate, the outermost surface layer being bonded through covalent bonds to the surface of the substrate and containing silane groups having a fluoroalkyl group wherein the number of fluorine atoms counted from the end of the fluoroalkyl group is 9 or more,
   and
a transparent article comprising a transparent substrate and a transparent monomolecular film formed as an outermost surface layer either directly or indirectly on two opposite surfaces of the transparent substrate, one of the surfaces of the transparent substrate being covered with a covalently bonded monomolecular film containing silane groups having a fluoroalkyl group wherein the number of fluorine atoms counted from the end of the fluoroalkyl group is 9 or more, and the other surface of the transparent substrate being covered with a covalently bonded monomolecular film containing hydrophilic groups.

Preferably, the outermost surface layer is bonded to the surface of the substrate through -Si- bonds.

Preferably, the outermost surface layer is bonded to the surface of the substrate through siloxane bonds via a siloxane-based protective film prepared on the substrate.

Preferably, the monomolecular film is formed by covalently bonding a silane halide-based or alkoxy silane-based surface active material represented by formula (A) or (B) either directly or indirectly to the surface of the substrate:

F (CF₂)ₘ (CH₂)ₙ Si R_{q} X_{3-q} (A)

wherein m represents an integer ranging from 4 to 15, n represents an integer ranging from 0 to 15, the sum of m and n ranges from 10 to 30, q represents an integer ranging from 0 to 2, R represents an alkyl or an alkoxyl group, and X is a halogen atom or an alkoxy group;

F(CF₂)_{m'} (CH₂)_{n'}A (CH₂)ₚ Si R_{q} X_{3-q} (B)

wherein m' represents an integer ranging from 4 to 8, n' represents an integer ranging from 0 to 2, p represents an integer ranging from 5 to 25, q represents an integer ranging from 0 to 2, X represents a halogen atom or an alkoxy group, R represents an alkyl or an alkoxy group, and A represents -O-, -COO- or -Si(CH₃)₂-.

Preferably, the monomolecular film is covalently bonded to a protective film covering the substrate.

Preferably, the surface active material is selected from a compound of the formula:
CF₃(CF₂)₃(CH₂)₂Si(CH₃)₂(CH₂)₉SiCl₃,
CF₃(CF₂)₇(CH₂)₂Si(OCH₃)Cl₂, or
CF₃(CF₂)₇(CH₂)₂Si(CH₃)Cl₂.

Preferably, the hydrophilic groups are hydroxyl groups.

Another object of the invention is to provide a method of modifying a surface of a transparent substrate.

The invention further provides a method of modifying a surface of a transparent substrate, said method comprising:
applying, in a non-aqueous organic solvent, a silane-based surface active material being a compound containing a fluoroalkyl group, wherein the number of fluorine atoms counted from the end of the fluoroalkyl group is 9 or more, either directly or indirectly to a surface of the transparent substrate under such conditions that the silane-based surface active material is either directly or indirectly covalently bonded to the surface of the substrate, thereby forming a monomolecular film formed as an outermost surface layer being either directly or indirectly bonded through covalent bonds to the surface of the substrate and containing silane groups having a fluoroalkyl group wherein the number of fluorine atoms counted from the end of the fluoroalkyl group is 9 or more,
   and
a method of modifying a surface of a transparent substrate material having two surfaces, comprising:
   (A) contacting both surfaces of the molded transparent substrate with a non-aqueous solvent containing a material having at least two chlorosilyl groups:
   (B) thereafter washing the transparent substrate using a non-aqueous organic solution to remove the non-reacted material having at least two chlorosilyl groups from the transparent substrate:
   (C) thereafter treating the transparent substrate with water, thereby forming a hydrophilic monomolecular film composed of a silane material having at least one silanol group: and
   (D) treating the thus formed transparent substrate having silanol groups with a silane-based surface active material being a compound having a reactive silane group at one end and a fluoroalkyl group at the other end, wherein the number of fluorine atoms counted from the end of the fluoroalkyl group is 9 or more, thereby laminating an outermost covalently bonded monomolecular hydrophobic film containing silane groups having a fluoroalkyl group, wherein the number of fluorine atoms counted from the end of the fluoroalkyl group is 9 or more, on the hydrophilic monomolecular film having silanol groups.

Preferably, the silane-based surface active material is a compound containing a chlorosilyl (-SiCl) end-group.

Preferably, the silane-based surface active material is a compound represented by the formula:

CF₃-(CF₂)ₜ-(R')ᵣ-SiClᵥY₃₋ᵥ

wherein t is an integer of at least 3, preferably 3 to 10, r is 0 or 1, R' is an alkylene group having 1 to 20 carbon atoms which may contain a vinylene (-CH=CH-) group or an ethynylene (-C≡C-) group or which may be interrupted by -O-, -Si(CH₃)₂-, or -COO-, Y is a hydrogen atom, a lower alkyl group or a lower alkoxy group and v is an integer ranging from 0 to 2.

Preferably, the method further comprises the step of coating one surface of the transparent substrate with a water-soluble coating film between the steps (C) and (D), and the step of removing the water soluble coating film after the step (D) thereby forming a hydrophobic monomolecular film on one surface and a hydrophilic monomolecular film on the other surface.

Preferably, the reactive silane group is a chlorosilyl group.

Preferably, the material having at least two chlorosilyl groups is selected from the group consisting of:
SiCl₄, SiHCl₃, SiH₂Cl₂, and Cl(SiCl₂O)ₙSiCl₃
wherein n is an integer of 1 to 4.
Figure 1 is a schematic sectional view, enlarged in scale to the molecular level, showing the status of a glass surface in the formation of a chemically adsorbed film;
Figure 2 is a schematic sectional view, enlarged in scale to the molecular level, showing the status of a glass surface in the formation of a chemically adsorbed film:
Figure 3 is a schematic sectional view, enlarged in scale to the molecular level, showing the status of a glass surface in the formation of a chemically adsorbed film;
Figure 4 is a schematic sectional view, enlarged in scale to the molecular level, showing the status of a glass surface in the formation of a chemically adsorbed film;
Figure 5 is a schematic sectional view, enlarged in scale to the molecular level, showing the status of a glass surface in the formation of a chemically adsorbed film;
Figure 6 is a graph showing the surface energy of various chemically adsorbed films:
Figure 7 is a schematic sectional view, enlarged in scale to the molecular level, showing the surface of a windshield glass as an embodiment of the transparent article according to the invention;
Figure 8 is a schematic sectional view, enlarged in scale to the molecular level, showing the surface of a windshield glass as a different embodiment of the transparent substrate used according to the invention;
Figure 9 is a schematic sectional view, enlarged in scale to the molecular level, showing a windshield glass as a further embodiment of the transparent substrate used according to the invention;
Figure 10 is a schematic sectional view, enlarged in scale to the molecular level, showing the surface of a windshield glass as a still further embodiment of the transparent article according to the invention;
Figure 11 is a schematic sectional view, enlarged in scale to the molecular level, showing the surface of a windshield glass as a yet further embodiment of the transparent article according to the invention.

The transparent substrate is usually made of transparent materials such as glass and plastics. Where the substrate is made of glass, its surface contains hydrophilic groups such as hydroxyl group. Where a plastic is the substrate material, the surface may be readily made hydrophilic by oxidizing treatment. By contacting the substrate material with a non-aqueous organic solvent solution of a compound having a fluoroalkyl group and a reactive silane group, a reaction between the active hydrogen in the hydrophilic groups of the substrate surface and the reactive silane groups occurs to form a monomolecular film bonded via -SiO- groups (i.e., a covalently bonded film). Such a reaction is called a chemical adsorption reaction, and the monomolecular film obtained in this way is called a chemically adsorbed single molecular (or unimolecular or monomolecular) film. When this chemically adsorbed monomolecular film is coupled via firm chemical bonds to a real image side mirror surface, its adhesion is so strong that usually it is not separated unless the surface of the transparent substrate is cut away. Since the compound has a hydrophobic group at the other end, this hydrophobic property provides a contamination-free effect.

As noted before, as the transparent substrate material used according to the invention, a plastic material such as acrylic resin and polycarbonate resin may be used in addition to glass, although glass is most usual and extensively used. The surface of the transparent substrate used according to the invention has to have an exposed hydrophilic group. Examples of the hydrophilic group are those having active hydrogen, e.g., a hydroxyl group, a carbonxl group, an amino group or an imino group. Where the transparent substrate surface does not have a sufficient amount of hydrophilic groups, it is rendered hydrophilic by usual means such as electron or ion beam irradiation in an oxygen or nitrogen atmosphere.

The molecule constituting the chemically adsorbed monomolecular film may be a silane-based surface active compound having a chlorosilane (-SiClᵥY₃₋ᵥ) group or an alkoxysilane (Si(OW)ᵥY₃₋ᵥ) group at one end and a fluorine-substituted alkyl group at the other end. In the above formulas, v represents an integer ranging from 1 to 3, Y represents a hydrogen atom or a lower alkyl (for example C₁ to C₆ ) or lower alkoxy group (for example C₁ to C₆ ), and W represents a lower alkyl group. Among the silane-based surface active compounds mentioned above, chlorosilane-based surface active compounds are preferred, since they can reliably undergo a chemical adsorption reaction to form a chemically adsorbed monomolecular film at normal temperature. Among the chlorosilane-based surface active compounds, those having a trichlorosilane group (v is 3) is preferred because siloxane bounds intervene between adjacent adsorbed molecules. Further, in order to increase the concentration of the adsorbed molecules, the silane-based surface active compound having a straight chain is preferred. Examples of especially preferred chlorosilane-based surface active compounds are those represented by the formula:

CF₃-(CF₂)ₜ-(R²)ᵣ-SiClᵥY₃₋ᵥ (D)

where t is an integer of at least 3, preferably 3 to 10, r is 0 or 1, R² is an alkylene group of at least one (preferably 1 to 20) carbon atoms which may contain a vinylene (-CH=CH-), ethynylene (-C≡C-) group or may be interrupted by a COO group or by a silicon or oxygen atom, and Y is a hydrogen atom, a lower alkyl group (for example C₁ to C₆ ) or lower alkoxy group (for example C₁ to C₆ ), and v is an integer ranging from 0 to 2. Preferably, those chlorosilane-based surface active compounds have 12 to 22 carbon atoms. More specific examples include:
CF₃(CF₂)₇(CH₂)₂SiCl₃,
CF₃(CF₂)₃(CH₂)₂Si(CH₃)₂(CH₂)₉SiCl₃,
CF₃(CF₂)₅(CH₂)₂SiCl₃.

Those surface active compounds in which R² in the above formulas contains a vinylene or ethynylene group are preferred, since by causing a polymerization of unsaturated bonds with a catalyst or with light or high energy ray irradiation, intra-molecular bonds may be produced, which result in a firmer monomolecular film.

The transparent article according to the invention is usually manufactured from a molded transparent substrate. When the chlorosilane-based surface active material is used, the chemically adsorbed monomolecular film usually has to be washed without contacting with water after it is formed. Unless this process is executed, the remaining unreacted chlorosilane-based surface active compound reacts with water and becomes whitish.

Further, particularly the chlorosilane-based surface active compound has to be dissolved in a non-aqueous (substantially non-water ) organic solvent because it is highly reactive with water. Examples of such solvents are n-hexadecane, toluene, xylene, dicyclohexyl, carbon tetrachloride, chloroform, or freon 113. These solvents may be used either alone or in combination. It is possible to use methyl alcohol or ethyl alcohol as the solvent in case of other silane-based surface active compounds than those based on chlorosilane.

To form the chemically adsorbed monomolecular film according to the invention, in a preferred embodiment, one surface of the transparent substrate may be contacted with a material having at least two chlorosilyl groups, before a silane-based surface active compound containing a hydrophobic group is chemically adsorbed on the transparent substrate surface. The material having at least two Cl-Si groups reacts with an active hydrogen-containing group of the transparent substrate surface and unreacted Cl-Si group or groups remain in the reacted material. The surface of the transparent substrate thus-treated is washed with an organic solution to remove the unreacted material containing at least two chlorosilyl groups. The surface is then treated with water (washing with water or exposing to air to react with moisture in the air) to form a monomolecular film containing silanol groups (Si-OH) on the surface of the substrate (see Figure 9).

This is desirable in that a silane-based surface active compound can be chemically adsorbed at a high concentration even when the substrate has only a very small quantity of hydrophilic groups, such as a quartz glass or tempered glass. Examples of the material having at least two chlorosilyl groups are:
SiCl₄, SiHCl₃, SiH₂Cl₂,
Cl-(SiCl₂O)ᵢSiCl₃, and
H_{ℓ}(R³)_{3-ℓ}Si(R⁴)ᵢSiClₖ(R⁵)₃₋ₖ .
It is usually desired that the number of Cl-Si bonds is as large as possible for high concentration chemical adsorption of the silane-based surface active compound containing hydrophobic groups. In the above formulas, i represents an integer of from 1 to 4, ℓ and k represent each an integer ranging from 1 to 3, R³ and R⁵ are lower-alkyl groups, and R⁴ represents an alkylene group with a carbon number of at least 1 such as 1 to 6. Preferably those materials have 3 or 4 Cl-Si bonds and are inorganic. SiCl₄ is most preferred as a material containing a plurality of chlorosilyl groups, because it is a very small molecule and is highly reactive for producing silanol groups, thus being highly effective for making the quartz glass surface uniformly hydrophilic.

It is possible to form a chemically adsorbed monomolecular film containing a hydrophobic group on only one surface of a transparent substrate and to form a chemically adsorbed monomolecular film containing a hydrophilic group on the other surface, thus obtaining a substrate with has different characteristics on the opposite sides. Such a substrate may be obtained by chemically adsorbing the above-mentioned material containing a chlorosilane group on both surfaces of a transparent substrate, then treating the surface (such as washing) to form silanol groups on the surface, then coating the surface, one of the surfaces, on which it is desired to leave a hydrophilic monomolecular film, with an aqueous solution of a water-soluble polymer material, e.g., polyvinyl alcohol or prulane, then forming a chemically adsorbed monomolecular film containing a hydrophobic group on the other surface of the substrate and subsequently washing away the water-soluble polymer material with water.

The chemically adsorbed monomolecular film produced according to the invention may be either a single monomolecular layer or a lamination of two or more monomolecular layers. In the latter case, however, it is necessary that there are chemical bonds between adjacent laminated layers. For producing such a lamination of monomolecular layers, one preferred method is as follows. At first a chlorosilane-based surface active compound having a group (such as a vinyl or ethynyl group) that can subsequently be converted to an active hydrogen-containing reactive group (such as a hydroxyl, imino or amino group) is used to form a monomolecular film. The convertible group is then converted to the active hydrogen-containing reactive group. To a surface thus treated, a chlorosilane-based surface active compound is applied to form a hydrophobic monomolecuar film.

With the transparent article according to the invention, the chemically adsorbed monomolecular film formed on the substrate surface is as thin as of the order of nanometers (nm) and dose not spoil the intrinsic transparency of the substrate. In addition, the chemically adsorbed monomolecular film produced according to the invention has a hydrophobic property and is not susceptible to surface contamination. Further, by forming a chemically adsorbed hydrophobic monomolecular film on one surface of a transparent substrate and forming a chemically adsorbed hydrophilic monomolecular film on the other surface of the substrate, a transparent article which has hydrophobic and contamination-free effects on one surface and antifogging effects on the other surface can be obtained.

This invention can be applied to a variety of materials including a display-form touchi pannel switch, a face plate for a photocopy machine, a fresnel plate for an overhead projector, a display glass, a display optical filter, a halogen lamp, a mercury lamp, a sodium lamp, an electric bulb, a chandelier, a glass or plastic lens, a microscope lens, a telescope lens, a binocular lens, a magnifying glass lens and all sorts of apparatus lenses.

This invention will now be illustrated with reference to the following examples and the drawings.

### Example 1

In a chloroform solution containing 80 wt % n-hexadecane and 12 wt % carbon tetrachloride a silane-based surface active compound represented by formula:

CH₂=CH-(CH₂)₁₆-SiCl₃

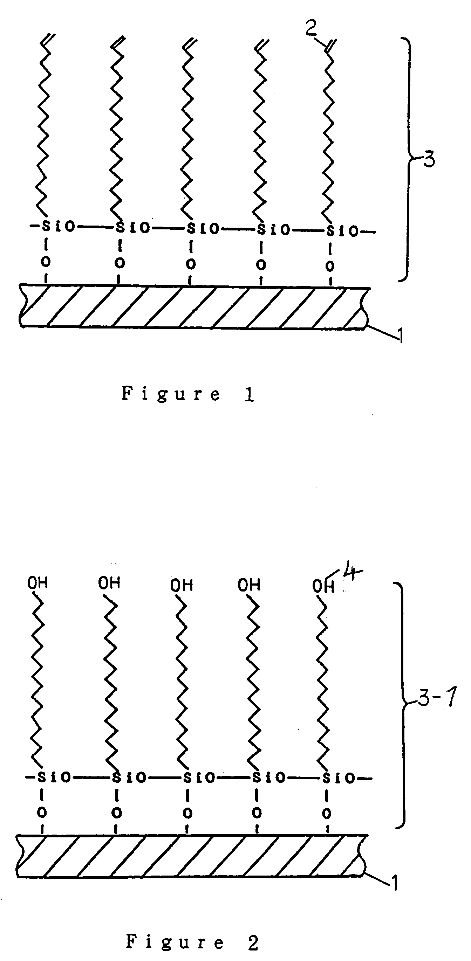

containing a vinyl group (CH₂=CH-) (see Figure 1) is dissolved to a concentration of 3 x 10⁻³ to 5 x 10⁻² Mol., and a glass substrate 1 as a transparent substrate was dipped into the solution and held at room temperature for one hour. Since the surface of the glass substrate 1 contained a number of hydroxyl groups, a reaction took place between chlorosilyl groups (-SiCl) in the chlorosilane-based surface active compound and the hydroxyl groups (-OH) and a bond represented by formula [1]; 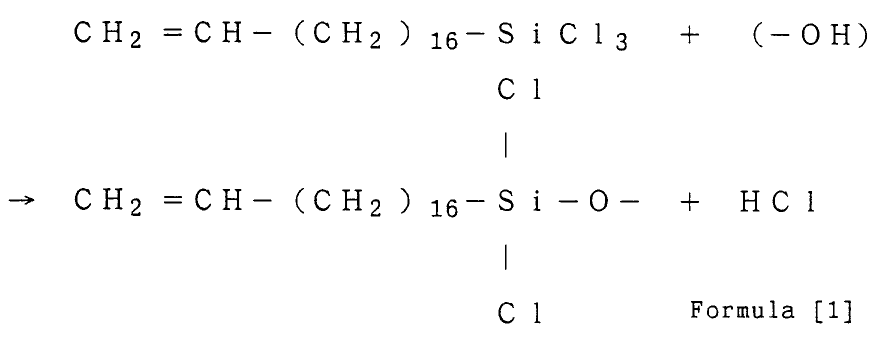 is formed on the substrate surface.

The glass substrate 1 was then washed by freon 113 to remove the material remaining on the surface without reaction, followed by washing with water or exposing to air to react with moisture in the air. The -SiCl group was changed to a -SiOH group as in formula [2].

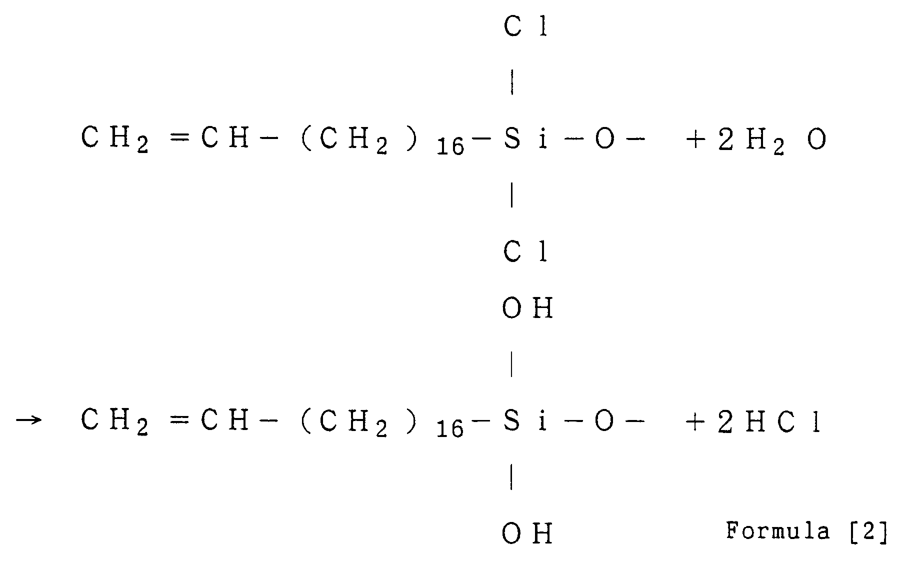

Each silanol group (-SiOH) was then dehydrated and crosslinked to form a siloxan bond (-SiO-) as in formula [3].

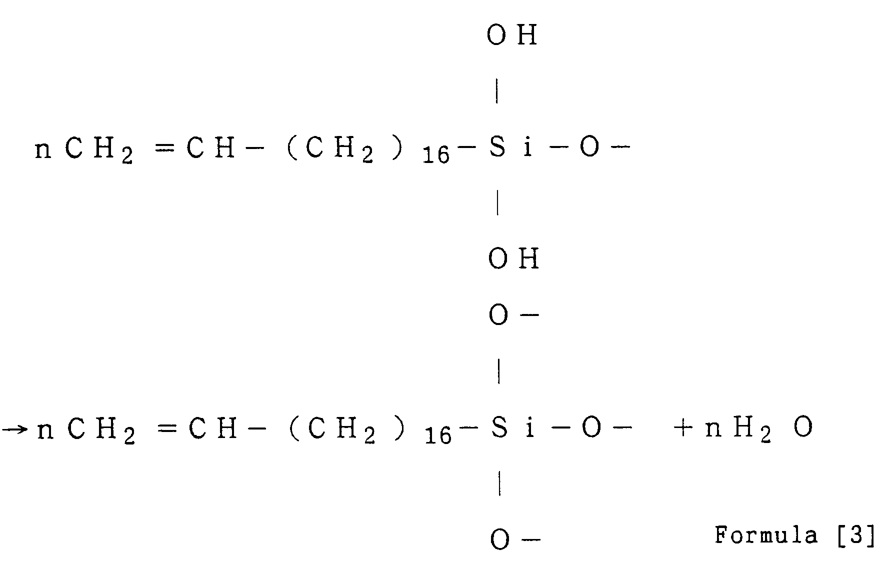

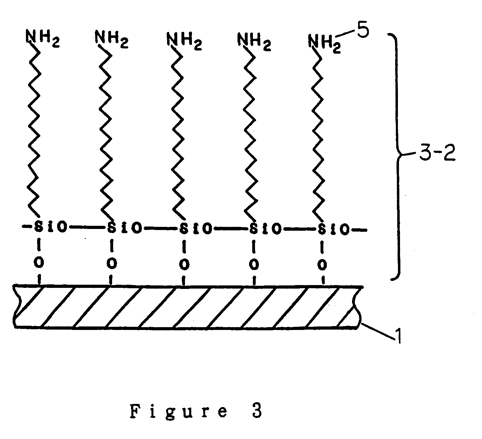

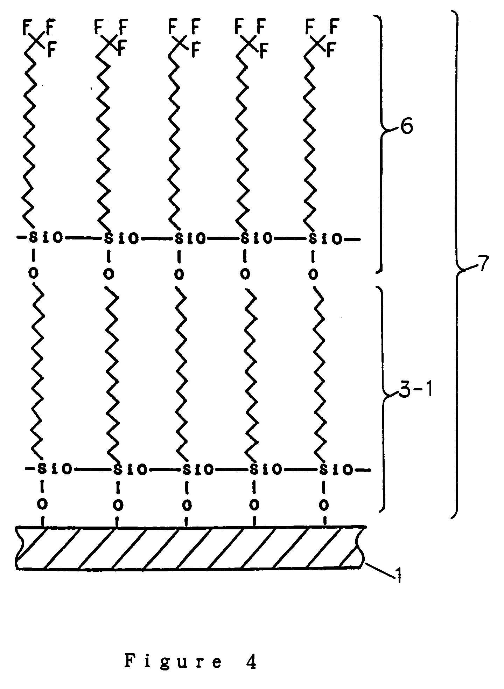

Thus, an adsorbed monomolecular protective film 3 containing a vinyl group 2 was formed as a single layer with a thickness from 2 to 3 nm on the surface in a chemically coupled form via oxygen atoms (see Figure 1). The glass substrate is then irradiated in an atmosphere containing oxygen or N₂ (or in air) with about 3 Mrads of an energy beam (e.g., electron beam, X-rays, gamma (γ) rays, ultraviolet (UV) rays or ion beam), thus providing the vinyl group portion 2 with hydroxyl (-OH) groups 4 (in case of oxygen atmosphere) as shown in Figure 2 or amino (-NH₂) groups 5 (in case of nitrogen atmosphere) as shown in Figure 3. Those hydroxyl, amino, and/or imino groups may be formed where air is the atmosphere.

The fact that these functional groups are attached to vinyl groups is confirmed from FT-IR analysis.

It is possible to process the vinyl groups arranged on the surface in a plasma containing O₂ or N₂ as well to form an adsorbed monomolecular protective film 3-1 with attached -OH groups as shown in Figure 2 or an adsorbed monomolecular protective film 3-2 with attached -NH₂ groups as shown in Figure 3.

Finally, a solution of a mixed solvent composed of 80 wt % n-hexane, 12 wt % carbon tetrachloride and 8 wt % chloroform was prepared by dissolving a silane-based surface active compound containing fluorine represented by formula:

F(CF₂)ₘ (CH₂)ₙ Si R_{q} X_{3-q} (A)

[where m represents an integer ranging from 4 to 15, n represents an integer ranging from 0 to 15, the sum of m and n ranges from 10 to 30, q represents an integer ranging from 0 to 2, R represents an alkyl or an alkoxy group, and X is a halogen atom or an alkoxy group]; or

F(CF₂)_{m'} (CH₂)_{n'}A (CH₂)ₚ Si R_{q} X_{3-q} (B)

[where m' represents an integer ranging from 4 to 8, n' represents an integer ranging from 0 to 2, p represents an integer ranging from 5 to 25, q represents an integer ranging from 0 to 2, X represents a halogen atom or an alkoxy group, R represents an alkyl or an alkoxy group, and A represents -O-, a -COO- or -Si(CH₃)₂-],
in a concentration of the order of 2 x 10⁻³ to 5 x 10⁻² Mol., and the glass substrate with the adsorbed monomolecular protective film 3-1 or 3-2 formed thereon was dipped into the solution and held for one hour. Since -OH groups, -NH groups or -NH₂ groups were exposed on the substrate surface as shown in Figure 2 or 3, with the dipping a reaction was brought about between the chlorosilyl group of the chlorosilane-based surface active compound containing fluorine and the -OH, -NH or -NH₂ groups, thus producing covalent bonds on the surface.

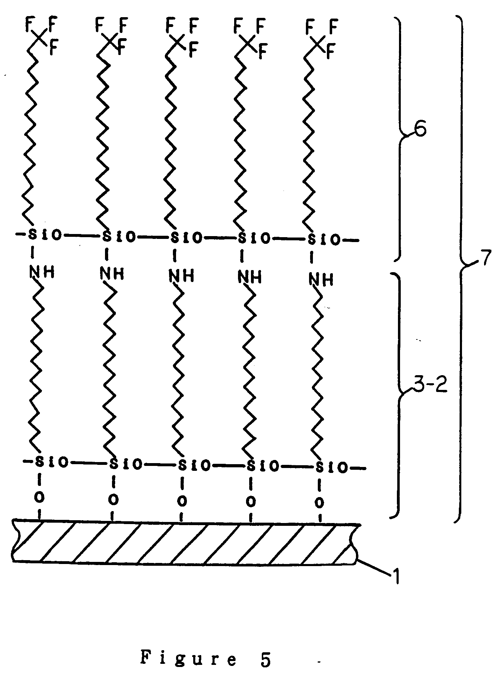

Thus, a lamination film 7 having a high density was formed on the surface of the glass substrate such that an adsorbed monomolecular film 6 containing fluorine was chemically bonded to a lower adsorbed monomolecular film 3-1 as shown in Figure 4 or to a lower adsorbed monomolecular film 3-2 as shown in Figure 5.

Where no monomolecular film is required between the hydrophobic oil-phobic surface film and the glass substrate, a chlorosilane-based surface active compound may be used for the first adsorption to form an adsorbed monomolecular protective film. By so doing, only a single layer of an adsorbed monomolecular protective film containing fluorine on the surface can be formed.

Where a plurality of monomolecular films are necessary as protective films, CH₂=CH-(CH₂)ₙSiCl₃ may be used as chemical adsorption reagent, the steps of chemical adsorption and radiation irradiation may be repeated, and finally a chlorosilane-based surface active compound containing fluorine may be adsorbed as a chemical reagent. By so doing, a hydrophobic oil-phobic film constituted by a single layer of an adsorbed monomolecular film containing fluorine formed on the surface via a plurality of necessary protective films can be obtained.

Specific examples of the fluorine-containing surface active material include
CF₃(CF₂)₃(CH₂)₂Si(CH₃)₂(CH₂)₉SiCl₃, and
CF₃(CF₂)₇(CH₂)₂SiCl₃.

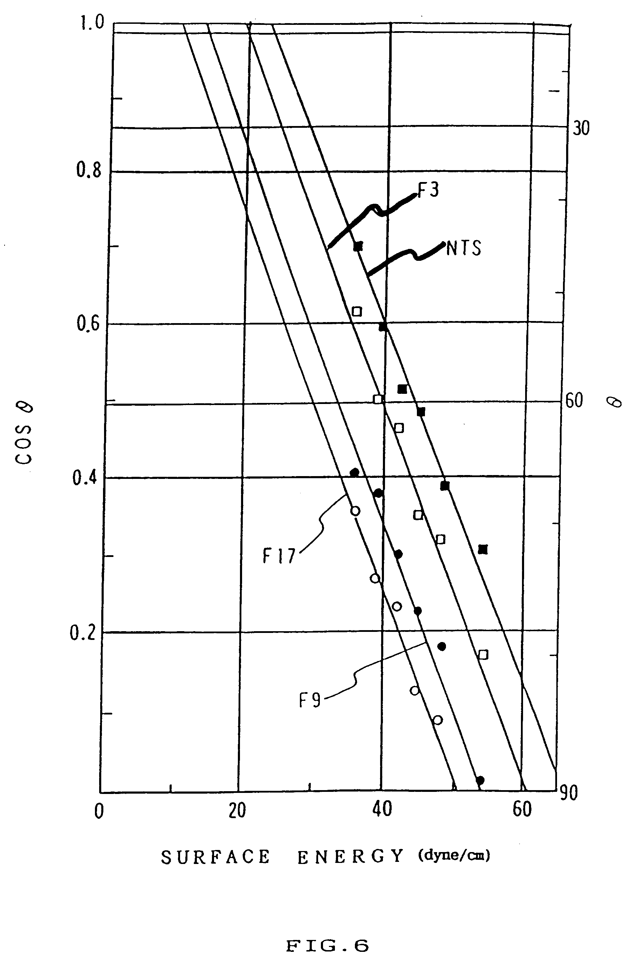

The surface energy of the adsorbed monomolecular film was measured by evaluation of the water contact angle (with an automatic contact angle gauge manufactured by Kyowa Kaimen Kagaku Co.). The results are shown in Figure 6. Figure 6 is a graph showing relations between $\text{cos θ}$ and surface energy.

As is seen from Figure 6, the surface energy Is reduced as the number of fluorine atom increases. It is confirmed that when the number of fluorine atoms is 9 or more, the surface energy of the film is lower than that of polytetrafluoroethylene and that the surface is very highly hydrophobic and oil-phobic.

The water wetting angle measured at the surface of the adsorbed film was 140 to 150 degrees.

Thus, by using such glasses, it would be possible to provide a wiperless moter vehicle windshild or windscreen glasses and also prevent fogging of a glass lens surface.

In Figure 6, labeled F17, F9, F3 and NTS designate adsorbed monomolecular films respectively of;
F17; CF₃(CF₂)₇(CH₂)₂-Si(CH₃)₂(CH₂)₉SiCl₃
F9; CF₃(CF₂)₃(CH₂)₂O(CH₂)₁₅SiCl₃
F3 ; CF₃COO(CH₂)₁₅SiCl₃ and
NTS; CH₃(CH₂)₁₉SiCl₃.

The above embodiment concerned with tempered glass, but the invention is applicable to all the glasses aiming to improve the quality of the glass surfaces of window glasses used for e.g. vehicles, electric cars, aircrafts and other means of transport, mirrors, glass vessels, glass or plastic lenses, and also other glass or plastic surfaces required to be hydrophobic and oil-phobic.

Further, while the above embodiment concerned with the adsorbed monomolecular films as glass protective films, the transparent substrate used according to the invention is by no means limited to glass, but it may of course be protective films having functions as light-blocking film, ultraviolet absorption film and infrared absorption film as well.

Further, the glass is not limited to colorless transparent glass, but the invention is applicable to roughened surfaces and also to colored glass and glass fibers.

In general, the invention is applicable to all techniques of chemical coupling of glass having hydrophilic groups on the surface and a silane-based surface active compound containing the fluoroalkyl group by using a chemical adsorption process.

Where the surface of a protective film or a transparent substrate itself is not hydrophilic, the silane-based surface active compound containing a hydrophobic group used according to the invention may be provided after making the surface hydrophilic by usual means such as corona discharge in an atmosphere containing oxygen or sputtering.

The chlorosilane-based surface active compound, in one preferred embodiment, is represented by formula ;

F(CF₂)ₘ (CH₂)ₙ SiR_{q} X_{3-q} or F(CF₂)_{m'} (CH₂)_{n'} A(CH₂)ₚ SiR_{q} X_{3-q}

When such a compound is employed, a highly concentration very thin organic film can be formed substantially pin hole free, with a uniform thickness in a hydrophobic oil-phobic monomolecular film chemically coupled to the glass substrate surface. The symbols in the above formulas (A) and (B) are as defined hereinbefore.

It is thus possible to effect a very highly durable surface treatment for prevention of contamination, fogging and wetting of the glass surface.

### Example 2

As a transparent substrate, a moter vehicle windshield or windscreen glass was washed with an organic solution. Meanwhile, as a material containing a fluorocarbon group and a chlorosilane group, a compound of the formula:

CF₃(CF₂)₇(CH₂)₂SiCl₃

was dissolved in a non-aquaous solvent, i.e., a mixed solvent composed of 80 wt % of n-hexadecane, 12 wt % of carbon tetrachloride and 8 wt % of chloroform to a concentration of 2 wt %. The windshield glass was dipped into the solution and held for about 2 hours. The windshield glass had numerous hydroxyl groups on the surface, and thus a dehydrochlorination reaction was brought about between the chlorine in the chlorosilyl (-SiCl) group of the material containing a fluorocarbon group and a hydroxyl group and covalent bonds represented by formula 5 below were formed over the entire surface of the windshield glass. This reaction proceeded substatially same as above in formulas [1] to [3].

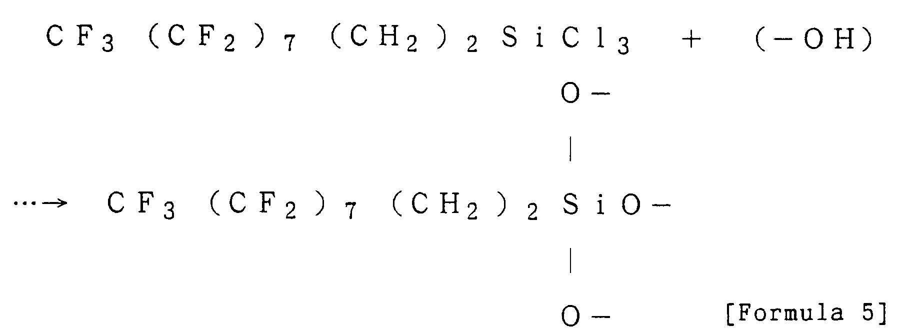

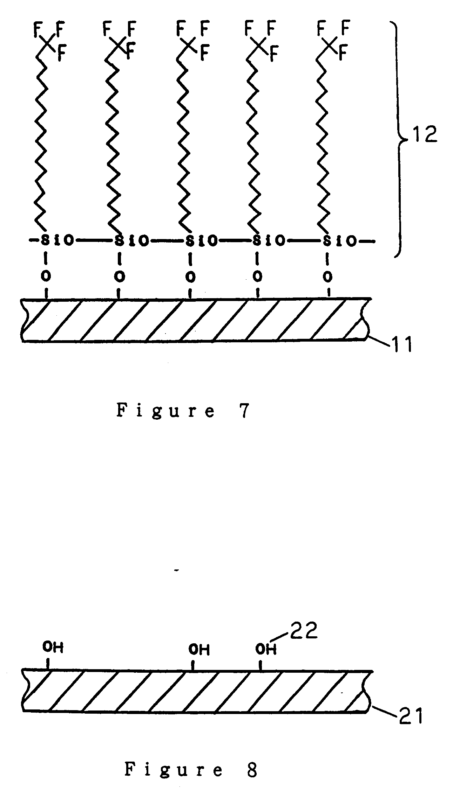

Thus, a single layer of a chemically adsorbed monomolecular film 12 containing fluorine was formed in a state chemically coupled to the windshield glass 11 by siloxane bonds, as shown in Figure 7. The thickness of this chemically adsorbed monomolecular film was assumed from the molecular structure to be about 1.5 nm. The monomolecular film was chemically coupled very firmly.

The resultant windshield glass was actually used for the test purpose. Its contamination was found to be greatly reduced compared to those without the above-described treatment. Contaminant, if attached, could be easily removed by merely rubbing the glass with e.g. a brush. Doing so produced neither scars nor scratches on the surface of the windshield glass 11. Further, it was possible to remove oily contaminants by merely washing with water.

Where plastic materials such as polyacrylic resins and polycarbonate resins were used as the material of the transparent substrate, similar techniques could be used by treating the surface by, for instance, a plasma treatment at 300 W for about 10 minutes to make the surface oxidized and hydrophilic while replacing the adsorption liquid with a freon 113.

### Example 3

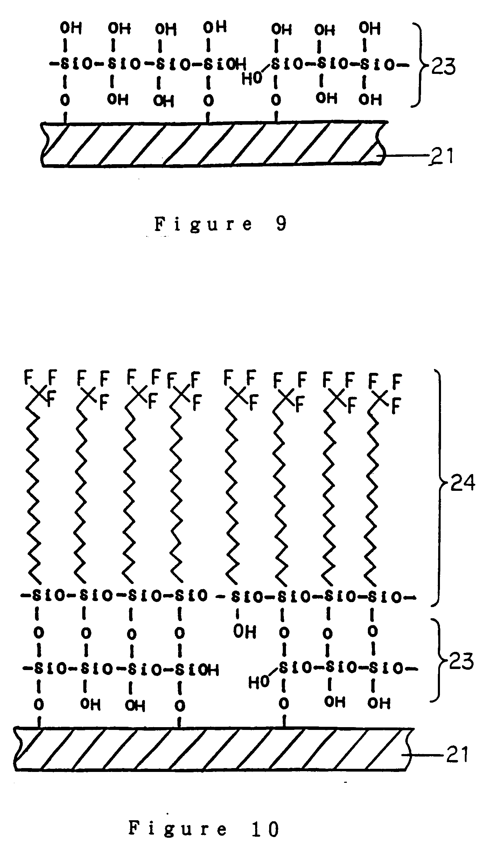

As solution obtained by dissolving about 1 wt. % of SiCl₄ as a material containing chlorosilyl groups in a chloroform solvent as a non-aqueous solvent was prepared. A windshied glass with the surface containing less hydroxyl groups although hydrophilic, e.g., an annealedly tempered glass was dipped into the solution and held for about 30 minutes. Then a dehydrochlorizing reaction was brought about on the surface of the windshield glass 21 due to the presence of some hydroxyl (-OH) groups 22 as hydrophilic groups on the surface, as shown in Figure 8. A chlorosilane monomolecular film constituted by a material containing chlorosilyl groups was formed. It will be seen that by using SiCl₄ as a material containing chlorosilyl groups, a dehydrochlorination reaction was brought about on the surface of the windshield glass 21 even in a presence of only a small amount of hydrophilic OH groups 22 on the surface of the front window glass 21, and molecules as shown in formula 6 and 7 are secured to the surface via -SiO- bonds.

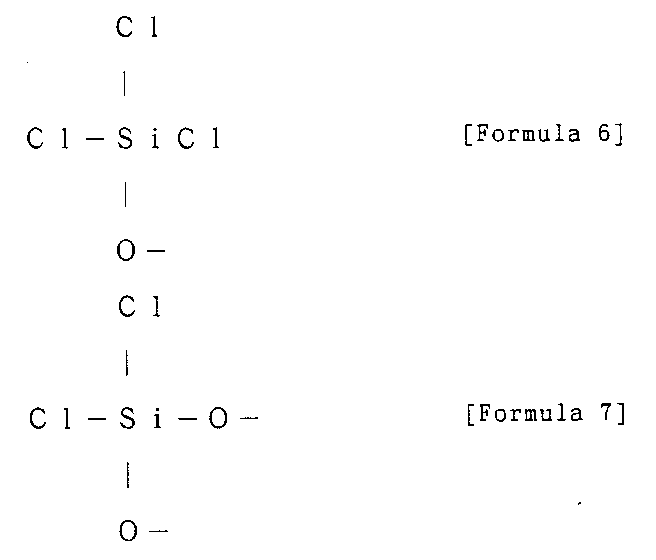

In this case, usually non-reacted SiCl₄ is also present on the chlorosilane monomolecular film. However, by subsequently washing the surface of the windshield glass 21 with chloroform as a non-aqueous solvent and then with water, the hydroxyl groups and non-reacted SiCl₄ molecules on the surface can be removed to obtain on the surface a siloxane monomolecular film 23 represented by formula 8 and 9 as shown in Figure 9.

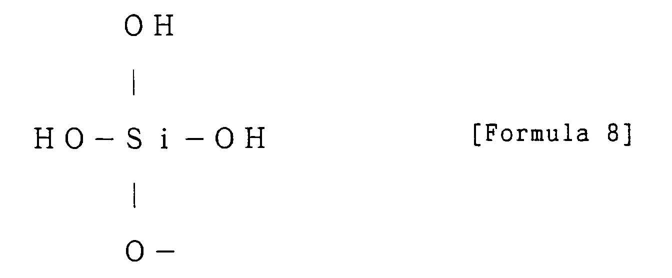

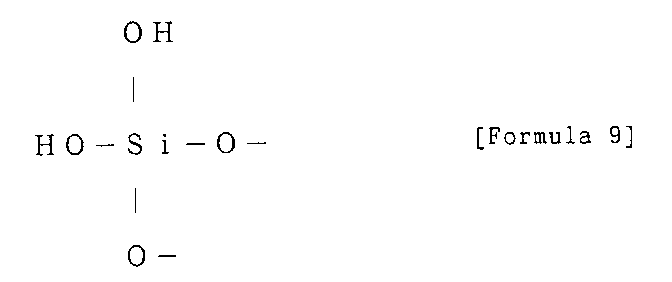

The monomolecular film 23 formed in this case is completely coupled to the surface of the windshield glass 21 via chemical bonds of -SiO-, and therefore it is never separated. In addition, the siloxane monomolecular film 23 thus obtained has numerous surface -SiOH groups roughly corresponding in number to about three times the number of the initial hydroxyl groups.

Now, in the solution mentioned before in connection with the Example 2 was dipped and held for about one hour, the windshield glass 21 having the siloxane monomolecular film 23 formed on the surface. As a result, bonds as shown as above in formula 5 were formed on the surface of the siloxane monomolecular film 23.

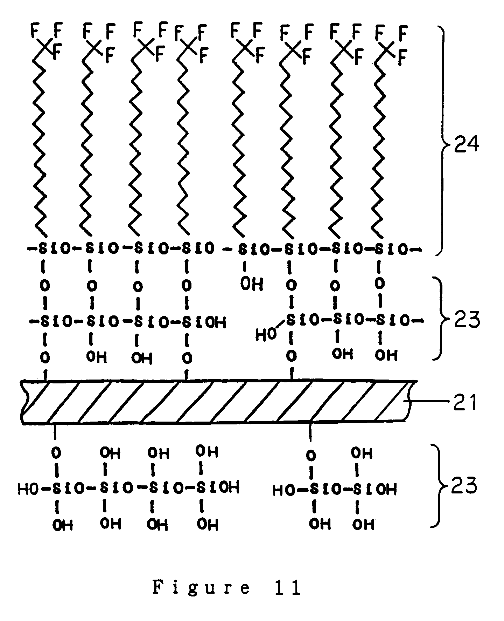

Thus, a chemically adsorbed monomolecular film 24 containing fluorine was formed to a thickness of about 1.5 nm. over the entire glass surface in a state chemically coupled to the lower siloxane monomolecular film 23, as shown in Figure 10. A separation test proved that the monomolecular film is never separated.

The windshield glass of this example was actually trial used, and no water drops were attached owing to the hydrophobic effect of the surface fluorine. Acetone containing wax was blown against the glass by assuming the flow of wax component. It was found that oil was repelled and no fogging was produced owing to the effect of the oil-phobic property of fluorine in the monomolecular film chemically adsorbed to the surface. In addition, contaminants that were attached could be easily wiped away.

### Example 4

As a transparent substrate, a display-form touch pannel glass (switch of CRT glass) having been processed was prepared and washed with an organic solvent. Meanwhile, as a material containing carbon fluoride groups and chlorosilane groups
CF₃(CF₂)₇(CH₂)₂SiCl₃
was dissolved to a concentration of 1 wt. % in a non-aquaous solvent, i.e., a mixed solvent containing 80 wt. % of n-hexadecane, 12 wt. % of carbon tetrachloride and 8 wt. % of chloroform. The CRT glass was dipped into the solution and held for about 2 hours. The CRT glass had numerous hydroxyl groups on the surface, and thus a dehydrochlorination reaction was brought about between the chlorine in the -SiCl groups of the material containing carbon fluoride groups and chlorosilane groups and hydroxyl groups to produce bonds represented by above formula 5 over the entire surface of the CRT glass. This reaction proceeds substantially same as above in formulas 1 to 3.

Thus, a single layer of a chemically adsorbed monomolecular film containing fluorine was formed in a state chemically coupled (i.e., covalently bonded) to the CRT glass by siloxane bonds. The thickness of this chemically adsorbed monomolecular film was assumed from the molecular structure to be about 1.5 nm. The monomolecular film was chemically coupled very firmly and was never separated.

The resultant CRT glass was actually trial used. Its contamination was found to be greatly reduced compared to those without treatment. Contaminant, if attached, could be easily removed by merely wiping the glass with e.g. a paper. Doing so produced neither scars nor scratches on the surface of the CRT glass.

### Example 5

In the case of a fresnel plate glass for overhead projector with the surface containing less hydroxyl groups although hydrophilic, e.g., an annealedly tempered glass, by holding the glass dipped for about 30 minutes in a solution obtained by dissolving about 1 wt. % of SiCl₄ as a material containing chlorosilyl groups in a chloroform solvent as a non-aqueous solvent, a dehydrochlorizing reaction was brought about on the surface of the fresnel plate glass due to the presence of some hydroxyl (-OH) groups as hydrophilic groups (inner layer film) on the surface. As the inner layer film forming material could be used in reverse to the above SiCl₄ such as SiHCl₃, SiH₂Cl₂, Cl-(SiCl₂O)ₙSiCl₃ (n being integer).

A chlorosilane monomolecular film (inner layer) constituted by a material containing chlorosilyl groups was formed. It will be seen that by using SiCl₄ as a material containing chlorosilyl groups, a dehydrochlorination reaction was brought about on the surface of the fresnel plate glass even in a presence of only a small amount of hydrophilic OH groups on the surface of the fresnel plate glass, and molecules as shown in the above formulas 6 and 7 are secured to the surface via -SiO- bonds.

In this case, usually non-reacted SiCl₄ is also present on the chlorosilane monomolecular film. Thereafter, by subsequently washing the surface of the fresnel plate glass with chloroform as a non-aqueous solution and then washing with water, the hydroxyl groups and non-reacted SiCl₄ molecules on the surface can be removed to obtain on the surface a siloxane monomolecular film represented by the above formulas 8 and 9.

Further, as a material containing carbon fluoride groups and chlorosilane groups ;
CF₃(CF₂)₇(CH₂)₂SiCl₃
was dissolved to a concentration of 2 wt. % in a non-aquaous solvent, i.e., a mixed solvent containing 80 wt. % of n-hexadecane, 12 wt. % of carbon tetrachloride and 8 wt. % of chloroform. The glass was dipped into the solution and held for about 1 hour. The glass had numerous hydroxyl groups on the surface, and thus a dehydrochlorination reaction was brought about between the chlorine in the -SiCl groups of the material containing carbon fluoride groups and chlorosilane groups and hydroxyl groups to produce bonds represented by the above formula 5 over the entire surface of the glass.

Thus, the chemically adsorbed monomolecular film containing fluorine was formed in a state chemically coupled to the glass by siloxane bonds. The thickness of this chemically adsorbed monomolecular film was assumed from the molecular structure to be about 1.5 nm. The monomolecular film was chemically coupled very firmly and was never separated.

When chemically adsorbing a monomolecular film using a non-aqueous solvent incorporating carbon fluoride groups and chlorosilane groups, an aqueous solution containing polyvinyl alcohol was coated as a hydrophilic film having resistance against an oganic solvent on the surface which was desired to be left hydrophilic in order to impart an antifogging effect. After the adsorption was over, the hydrophilic film was washed with water, thus obtaining a windshield glass with a hydrophobic oil-phobic contamination- free monomolecular film 24 formed on one surface and a monomolecular film 23 containing hydrophilic hydroxyl groups on the other surface, as shown in Figure 11. The antifogging effect of this glass was tested, and it was found that the glass surface left hydrophilic was never fogged.

In Example 2, only a single layer of a monomolecular film was formed, and in Example 3 only a single layer of a silane-based surface active compound containing fluorine was formed after the formation of a single layer of a siloxane monomolecular film. However, the same effects can be obtained by laminating a plurality of chemically adsorbed monomolecular films according to the invention instead of forming only a single layer.

Further, while the above example used
CF₃(CF₂)₇(CH₂)₂SiCl₃, by adding or incorporating vinylene (-CH=CH-) or ethynylene (-C≡C-) groups to or in a portion represented by R² in the chlorosilane-based surface active compound represented by CF₃(CF₂)ₜ-(R²)_{y}-SiClᵥX₃₋ᵥ, (wherein the symbols are as defined before) cross linking can be obtained with about 5 Mrads of electron beam after the formation of the monomolecular film for further improvement of the hardness of the monomolecular film.

As the carbon fluoride surface active compound could be used in addition to the above trichlorosilane-based surface active compounds such as;
CF₃(CF₂)₃(CH₂)₂Si(CH₃)₂(CH₂)₉SiCl₃,
CF₃(CF₂)₇(CH₂)₂SiCl₃, and
CF₃(CF₂)₅(CH₂)₂SiCl₃.

The same effects could be obtained with such alkoxysilane-based surface active compounds such as
CF₃(CF₂)₇(CH₂)₂Si(OCH₃)₃
by heating the surface active compound solution.

As has been described in the foregoing, according to the invention a very thin transparent hydrophobic monomolecular film in the nanometer order is formed on the transparent glass surface, and therefore the gloss which is intrinsic to the transparent glass is not spoiled. Further, the hydrophobic monomolecular film is highly hydrophobic and oil-phobic and can enhance the repellency to contamination of the surface. It is thus possible to provide a very highly contamination-free high performance transparent glass. Further, an antifogging effect could be obtained by leaving the other surface hydrophilic.

According to the invention, by using a chemical adsorption method, a hydrophobic monomolecular film with a small thickness of the nanometer level can be formed on the surface of a transparent substrate without spoiling gloss and transparency thereof. If the hydrophobic monomolecular film contains a fluorocarbon group, it has excellent hydrophobic and oil-phobic properties and permits improvement of surface contamination prevention effect. It is also possible to form a chemically adsorbed monomolecular film having hydrophobic and contamination prevention properties on one surface and a chemically adsorbed monomolecular film containing hydrophilic groups on the other surface and thus provide a transparent article having different natures on the opposite sides.

Thus, it is possible to provide a transparent article which is highly antifogging, hydrophobic, oil-phobic and contamination-free.

## Claims

1. A transparent, hydrophobic and oil-phobic article comprising a transparent substrate and at least one covalently bonded monomolecular transparent film formed as an outermost surface layer either directly or indirectly on at least one surface of the transparent substrate, the outermost surface layer being bonded through covalent bonds to the surface of the substrate and containing silane groups having a fluoroalkyl group wherein the number of fluorine atoms counted from the end of the fluoroalkyl group is 9 or more.

2. The article of claim 1, wherein the outermost surface layer is bonded to the surface of the substrate through -Si- bonds.

3. The article of claim 1, wherein the outermost surface layer is bonded to the surface of the substrate through siloxane bonds via a siloxane-based protective film prepared on the substrate.

4. A transparent article comprising a transparent substrate and a transparent monomolecular film formed as an outermost surface layer either directly or indirectly on two opposite surfaces of the transparent substrate, one of the surfaces of the transparent substrate being covered with a covalently bonded monomolecular film containing silane groups having a fluoroalkyl group wherein the number of fluorine atoms counted from the end of the fluoroalkyl group is 9 or more, and the other surface of the transparent substrate being covered with a covalently bonded monomolecular film containing hydrophilic groups.

5. The article of claim 4, wherein the hydrophilic groups are hydroxyl groups.

6. The article of claim 1, wherein the monomolecular film is formed by covalently bonding a silane halide-based or alkoxy silane-based surface active material represented by formula (A)or (B) either directly or indirectly to the surface of the substrate:
F (CF₂)ₘ (CH₂)ₙ Si R_{q} X_{3-q} (A)
wherein m represents an integer ranging from 4 to 15, n represents an integer ranging from 0 to 15, the sum of m and n ranges from 10 to 30, q represents an integer ranging from 0 to 2, R represents an alkyl or an alkoxyl group, and X is a halogen atom or an alkoxy group;
F(CF₂)_{m'} (CH₂)_{n'}A (CH₂)ₚ Si R_{q} X_{3-q} (B)
wherein m' represents an integer ranging from 4 to 8, n' represents an integer ranging from 0 to 2, p represents an integer ranging from 5 to 25, q represents an integer ranging from 0 to 2, X represents a halogen atom or an alkoxy group, R represents an alkyl or an alkoxy group, and A represents -O-, -COO- or -Si(CH₃)₂-.

7. The article of claim 6, wherein the monomolecular film is covalently bonded to a protective film covering the substrate.

8. The article of claim 6, wherein the surface active material is selected from a compound of the formula:
CF₃(CF₂)₃(CH₂)₂Si(CH₃)₂(CH₂)₉SiCl₃,
CF₃(CF₂)₇(CH₂)₂Si(OCH₃)Cl₂, or
CF₃(CF₂)₇(CH₂)₂Si(CH₃)Cl₂.

9. A method of modifying a surface of a transparent substrate, said method comprising:
applying, in a non-aqueous organic solvent, a silane-based surface active material being a compound containing a fluoroalkyl group, wherein the number of fluorine atoms counted from the end of the fluoroalkyl group is 9 or more, either directly or indirectly to a surface of the transparent substrate under such conditions that the silane-based surface active material is either directly or indirectly covalently bonded to the surface of the substrate, thereby forming a monomolecular film formed as an outermost surface layer being either directly or indirectly bonded through covalent bonds to the surface of the substrate and containing silane groups having a fluoroalkyl group wherein the number of fluorine atoms counted from the end of the fluoroalkyl group is 9 or more.

10. The method of claim 9, wherein the silane-based surface active material is a compound containing a chlorosilyl (-SiCl) end-group.

11. The method of claim 9, wherein the silane-based surface active material is a compound represented by the formula:
CF₃-(CF₂)ₜ-(R')ᵣ-SiClᵥY₃₋ᵥ
wherein t is an integer of at least 3, preferably 3 to 10, r is 0 or 1, R' is an alkylene group having 1 to 20 carbon atoms which may contain a vinylene (-CH=CH-) group or an ethynylene (-C≡C-) group or which may be interrupted by -O-, -Si(CH₃)₂-, or -COO-, Y is a hydrogen atom, a lower all group or a lower alkoxy group and v is an integer ranging from 0 to 2.

12. A method of modifying a surface of a transparent substrate material having two surfaces, comprising:
(A) contacting both surfaces of the molded transparent substrate with a non-aqueous solvent containing a material having at least two chlorosilyl groups;
(B) thereafter washing the transparent substrate using a non-aqueous organic solution to remove the non-reacted material having at least two chlorosilyl groups from the transparent substrate;
(C) thereafter treating the transparent substrate with water, thereby forming a hydrophilic monomolecular film composed of a silane material having at least one silanol group; and
(D) treating the thus formed transparent substrate having silanol groups with a silane-based surface active material being a compound having a reactive silane group at one end and a fluoroalkyl group at the other end, wherein the number of fluorine atoms counted from the end of the fluoroalkyl group is 9 or more, thereby laminating an outermost covalently bonded monomolecular hydrophobic film containing silane groups having a fluoroalkyl group, wherein the number of fluorine atoms counted from the end of the fluoroalkyl group is 9 or more, on the hydrophilic monomolecular film having silanol groups.

13. The method according to claim 12, which further comprises the step of coating one surface of the transparent substrate material with a water-soluble coating film between the steps (C) and (D), and the step of removing the water soluble coating film after the step (D) thereby forming a hydrophobic monomolecular film on one surface and a hydrophilic monomolecular film on the other surface.

14. The method of claim 12, wherein the reactive silane group is a chlorosilyl group.

15. The method of claim 12, wherein the silane-based surface active material is the same as defined in claim 11.

16. The method according to claim 12, wherein the material having at least two chlorosilyl groups is selected from the group consisting of:
SiCl₄, SiHCl₃, SiH₂Cl₂, and Cl(SiCl₂O)ₙSiCl₃
wherein n is an integer of 1 to 4.

## Patentansprüche

1. Transparenter, wasser- und ölabweisender Gegenstand, umfassend ein transparentes Substrat und mindestens einen kovalent gebundenen monomolekularen transparenten Film, der als eine äußerste Oberflächenschicht entweder direkt oder indirekt auf mindestens einer Oberfläche des transparenten Substrats aufgebracht ist, wobei die äußerste Oberflächenschicht über kovalente Bindungen an die Oberfläche des Substrats gebunden ist und Silangruppen mit einer Fluoralkylgruppe enthält, wobei die Anzahl der Fluoratome, gezählt vom Ende der Fluoralkylgruppe, 9 oder mehr beträgt.

2. Gegenstand nach Anspruch 1, wobei die äußerste Oberflächenschicht über -Si-Bindungen an die Oberfläche des Substrats gebunden ist.

3. Gegenstand nach Anspruch 1 wobei die äußerste Oberflächenschicht über Siloxanbindungen über einen Schutzfilm auf Siloxanbasis, der auf dem Substrat aufgebracht ist, an die Oberfläche des Substrats gebunden ist.

4. Transparenter Gegenstand, umfassend ein transparentes Substrat und einen transparenten monomolekularen Film, der als eine äußerste Oberflächenschicht entweder direkt oder indirekt auf zwei entgegengesetzten Oberflächen des transparenten Substrats aufgebracht ist, wobei eine der Oberflachen des transparenten Substrats mit einem kovalent gebundenen monomolekularen Film bedeckt ist, der Silangruppen mit einer Fluoralkylgruppe enthält, wobei die Anzahl der Fluoratome, gezählt vom Ende der Fluoralkylgruppe, 9 oder mehr betragt, und die andere Oberfläche des transparenten Substrats ist mit einem kovalent gebundenen monomolekularen Film, der hydrophile Gruppen enthält bedeckt

5. Gegenstand nach Anspruch 4, wobei die hydrophilen Gruppen Hydroxylgruppen sind.

6. Gegenstand nach Anspruch 1, wobei der monomolekulare Film gebildet wird, indem ein oberflächenaktives Material auf Silanhalogenidbasis oder Alkoxysilanbasis, dargestellt durch Formel (A) oder (B), entweder direkt oder indirekt kovalent an die Oberfläche des Substrats gebunden wird:
F (CF₂)ₘ (CH₂)ₙ Si R_{q} X_{3-q} (A)
worin m eine ganze Zahl im Bereich von 4 bis 15 ist, n ist eine ganze Zahl im Bereich von 0 bis 15, die Summe von m und n liegt im Bereich von 10 bis 30, q ist eine ganze Zahl im Bereich von 0 bis 2, R ist eine Alkyl- oder Alkoxygruppe, und X ist ein Halogenatom oder eine Alkoxygruppe,
F(CF₂)_{m'} (CH₂)_{n'} A (CH₂)ₚ Si R_{q} X_{3-q} (B)
worin m' eine ganze Zahl im Bereich von 4 bis 8 ist, n' ist eine ganze Zahl im Bereich von 0 bis 2, p ist eine ganze Zahl im Bereich von 5 bis 25, q ist eine ganze Zahl im Bereich von 0 bis 2, X ist ein Halogenatom oder eine Alkoxygruppe, R ist eine Alkyl- oder Alkoxygruppe, und A bedeutet -O-, -COO- oder-Si(CH₃)₂-.

7. Gegenstand nach Anspruch 6, wobei der monomolekulare Film kovalent an einen Schutzfilm gebunden ist, der das Substrat bedeckt.

8. Gegenstand nach Anspruch 6, wobei das oberflächenaktive Material eine Verbindung ist, ausgewählt aus
CF₃(CF₂)₃(CH₂)₂Si(CH₃)₂(CH₂)₉SiCl₃,
CF₃(CF₂)₇(CH₂)₂Si(OCH₃)Cl₂ und
CF₃(CF₂)₇(CH₂)₂Si(CH₃)Cl₂.

9. Verfahren zum Modifizieren einer Oberfläche eines transparenten Subtrats, umfassend:
das Aufbringen eines in einem nichtwäßrigen organischen Lösungsmittel gelösten oberflächenaktiven Materials auf Silanbasis, das eine Verbindung ist, die eine Fluoralkylgruppe enthält, wobei die Anzahl der Fluoratome, gezählt vom Ende der Fluoralkylgruppe, 9 oder mehr beträgt, entweder direkt oder indirekt auf eine Oberfläche des transparenten Substrats unter solchen Bedingungen, daß das oberflächenaktive Material auf Silanbasis entweder direkt oder indirekt kovalent an die Oberfläche des Substrats gebunden wird, wobei ein monomolekularer Film als eine äußerste Oberflächenschicht erhalten wird, die entweder direkt oder indirekt über kovalente Bindungen an die Oberfläche des Substrats gebunden ist und die Silangruppen mit einer Fluoralkylgruppe enthält, wobei die Anzahl der Fluoratome, gezählt vom Ende der Fluoralkylgruppe, 9 oder mehr beträgt.

10. Verfahren nach Anspruch 9, wobei das oberflächenaktive Material auf Silanbasis eine Verbindung ist, die eine endständige Chlorsilylgruppe (-SiCl) enthält.

11. Verfahren nach Anspruch 9, wobei das oberflächenaktive Material auf Silanbasis eine Verbindung ist, dargestellt durch die Formel:
CF₃-(CF₂)ₜ(R')ᵣ-SiClᵥY₃₋ᵥ
worin t eine ganze Zahl ist, mindestens jedoch 3, bevorzugt im Bereich von 3 bis 10, r ist 0 oder 1, R' ist eine Alkylengruppe mit 1 bis 20 Kohlenstoffatomen, die eine Vinylengruppe (-CH=CH-) oder eine Ethinylengruppe (-C≡C-) enthalten kann oder die die Gruppen -O-, -Si(CH₃)₂- oder -COO- enthalten kann, Y ist ein Wasserstoffatom, eine niedere Alkylgruppe oder eine niedere Alkoxygruppe, und v ist eine ganze Zahl im Bereich von 0 bis 2.

12. Verfahren zum Modifizieren einer Oberfläche eines transparenten Substratmaterials mit zwei Oberflächen, umfassend.
(A) das Inkontaktbringen beider Oberflächen des geformten transparenten Substrats mit einer nichtwäßrigen Lösung, die ein Material mit mindestens zwei Chlorsilylgruppen enthält,
(B) nachfolgend das Waschen des transparenten Substrats unter Verwendung einer nichtwäßrigen organischen Lösung, um nichtumgesetztes Material mit mindestens zwei Chlorsilylgruppen von dem transparenten Substrat zu entfernen;
(C) nachfolgend das Behandeln des transparenten Substrats mit Wasser, wobei ein hydrophiler monomolekularer Film gebildet wird, der aus einem Silanmaterial mit mindestens einer Silanolgruppe besteht; und
(D) das Behandeln des auf diese Weise gebildeten transparenten Substrats mit Silanolgruppen mit einem oberflächenaktiven Material auf Silanbasis das eine Verbindung mit einer reaktiven Silangruppe an einem Molekülende und einer Fluoralkylgruppe an dem anderen Molekülende ist, wobei die Anzahl der Fluoratome, gezählt vom Ende der Fluoralkylgruppe, 9 oder mehr beträgt, wobei ein äußerster kovalent gebundener monomolekularer hydrophober Film, enthaltend Silangruppen mit einer Fluoralkylgruppe, wobei die Anzahl der Fluoratome, gezählt vom Ende der Fluoralkylgruppe, 9 oder mehr beträgt, auf dem hydrophilen monomolekularen Film mit Silanolgruppen aufgebracht wird.

13. Verfahren nach Anspruch 12, weiterhin umfassend das Beschichten einer Oberfläche des transparenten Substratmaterials mit einem wasserlöslichen Überzugsfilm zwischen den Schritten (C) und (D), und das Entfernen des wasserlöslichen Überzugsfilms nach Schritt (D), wobei ein hydrophober monomolekularer Film auf einer Oberfläche und ein hydrophiler monomolekularer Film auf der anderen Oberfläche gebildet wird.

14. Verfahren nach Anspruch 12, wobei die reaktive Silangruppe eine Chlorsilylgruppe ist.

15. Verfahren nach Anspruch 12, wobei das oberflächenaktive Material auf Silanbasis das gleiche Material ist, das in Anspruch 11 beschrieben wurde.

16. Verfahren nach Anspruch 12, wobei das Material mit mindestens zwei Chlorsilylgruppen ausgewählt ist aus der Gruppe, bestehend aus
SiCl₄, SiHCl₃, SiH₂Cl₂ und Cl(SiCl₂O)ₙSiCl₃
worin n eine ganze Zahl im Bereich von 1 bis 4 ist.

## Revendications

1. Article transparent, hydrophobe et oléophobe comprenant un substrat transparent et au moins un film transparent monomoléculaire lié par covalence formé en tant que couche de surface la plus extérieure soit directement, soit indirectement, sur au moins une surface du substrat transparent, la couche de surface la plus extérieure étant liée par des liaisons covalentes à la surface du substrat et contenant des groupes silane comportant un groupe fluoroalkyle dans lequel le nombre d'atomes de fluor comptés depuis l'extrémité du groupe fluoroalkyle est 9 ou plus.

2. Article selon la revendication 1, dans lequel la couche de surface la plus extérieure est liée à la surface du substrat par des liaisons -Si-.

3. Article selon la revendication 1, dans lequel la couche de surface la plus extérieure est liée à la surface du substrat par des liaisons siloxane par l'intermédiaire d'un film protecteur à base de siloxane préparé sur le substrat.

4. Article transparent comprenant un substrat transparent et un film monomoléculaire transparent formé en tant que couche de surface la plus extérieure, soit directement, soit indirectement, sur deux surfaces opposées du substrat transparent, l'une des surfaces du substrat transparent étant recouverte d'un film monomoléculaire lié par covalence contenant des groupes silane comportant un groupe fluoroalkyle dans lequel le nombre d'atomes de fluor comptés depuis l'extrémité du groupe fluoroalkyle est 9 ou plus, et l'autre surface du substrat transparent étant recouverte d'un film monomoléculaire lié par covalence contenant des groupes hydrophiles.

5. Article selon la revendication 4, dans lequel les groupes hydrophiles sont des groupes hydroxyle.

6. Article selon la revendication 1, dans lequel le film monomoléculaire est formé en liant par covalence une matière tensio-active à base d'halogénure de silane, ou à base d'alcoxysilane, représentée par la formule (A) ou (B), soit directement, soit indirectement, à la surface du substrat :
F (CF₂)ₘ (CH₂)ₙ Si R_{q} X_{3-q} (A)
dans laquelle m représente un nombre entier allant de 4 à 15, n représente un nombre entier allant de O à 15, la somme de m et de n va de 10 à 30, q représente un nombre entier allant de O à 2, R représente un groupe alkyle ou un groupe alcoxyle et X est un atome d'halogène ou un groupe alcoxyle ;
F(CF₂)ₘ, (CH₂)ₙ,A (CH₂)ₚ Si R_{q} X_{3-q} (B)
dans laquelle m' représente un nombre entier allant de 4 à 8, n' représente un nombre entier allant de O à 2, p représente un nombre entier allant de 5 à 25, q représente un nombre entier allant de O à 2, X représente un atome d'halogène ou un groupe alcoxyle, R représente un groupe alkyle ou un groupe alcoxyle, et A représente -O-, -COO- ou -Si(CH₃)₂-.

7. Article selon la revendication 6, dans lequel le film monomoléculaire est lié par covalence à un film protecteur recouvrant le substrat.

8. Article selon la revendication 6, dans lequel la matière tensio-active est choisie dans le groupe constitué des composés de la formule:
CF₃(CF₂)₃(CH₂)₂Si(CH₃)₂(CH₂)₉SiCl₃,
CF₃(CF₂)₇(CH₂)₂Si(OCH₃)Cl₂, ou
CF₃(CF₂)₇(CH₂)₂Si( CH₃)Cl₂.

9. Procédé de modification d'une surface d'un substrat transparent, ledit procédé comprenant les étapes consistant à :
appliquer, dans un solvant organique non aqueux, une matière tensio-active à base de silane qui est un composé contenant un groupe fluoroalkyle, dans lequel le nombre d'atomes de fluor comptés depuis l'extrémité du groupe fluoroalkyle est 9 ou plus, soit directement, soit indirectement, sur une surface du substrat transparent dans des conditions telles que la matière tensio-active à base de silane soit, soit directement, soit indirectement, liée par covalence à la surface du substrat, en formant ainsi un film monomoléculaire formé en tant que couche de surface la plus extérieure liée, soit directement, soit indirectement, par des liaisons covalentes à la surface du substrat et contenant des groupes silane comportant un groupe fluoroalkyle dans lequel le nombre d'atomes de fluor comptés depuis l'extrémité du groupe fluoroalkyle est 9 ou plus.

10. Procédé selon la revendication 9, dans lequel la matière tensio-active à base de silane est un composé contenant un groupe chlorosilyle (-SiCl) d'extrémité.

11. Procédé selon la revendication 9, dans lequel la matière tensio-active à base de silane est représentée par la formule :
CF₃-(CF₂)ₜ-(R')ᵣ-SiClᵥY₃₋ᵥ
dans laquelle t est un nombre entier d'au moins 3, de préférence 3 à 10, r est 0 ou 1, R' est un groupe alkylène comportant 1 à 20 atomes de carbone qui peut contenir un groupe vinylène (-CH=CH-) ou un groupe éthynylène (-C≡C-)ou qui peut être interrompu par -0-, -Si(CH₃)₂-, ou -COO-, Y est un atome d'hydrogène, un groupe alkyle inférieur ou un groupe alcoxyle inférieur et v est un nombre entier allant de O à 2.

12. Procédé de modification d'une surface d'un matériau substrat transparent comportant deux surfaces comprenant les étapes consistant à :
(A) mettre en contact les deux surfaces du substrat transparent moulé avec un solvant non aqueux contenant une matière comportant au moins deux groupes chlorosilyle ;
(B) laver ensuite le substrat transparent, en utilisant une solution organique non aqueuse, pour enlever la matière n'ayant pas réagi comportant au moins deux groupes chlorosilyle, du substrat transparent ;
(C) traiter ensuite le substrat transparent avec de l'eau, en formant ainsi un film monomoléculaire hydrophile composé d'un matériau de silane comportant au moins un groupe silanol ; et
(D) traiter le substrat ainsi formé comportant des groupes silanol avec une matière tensio-active à base de silane qui est un composé comportant un groupe silane réactif à une extrémité et un groupe fluoroalkyle à l'autre extrémité, dans lequel le nombre d'atomes de fluor comptés depuis l'extrémité du groupe fluoroalkyle est 9 ou plus, en stratifiant ainsi un film hydrophobe monomoléculaire le plus extérieur, lié par covalence, contenant des groupes silane comportant un groupe fluoroalkyle, dans lequel le nombre d'atomes de fluor comptés depuis l'extrémité du groupe fluoroalkyle est 9 ou plus, sur le film monomoléculaire hydrophile comportant des groupes silanol.

13. Procédé selon la revendication 12, qui comprend en outre l'étape consistant à revêtir une surface du matériau substrat transparent d'un film de revêtement hydrosoluble entre les étapes (C) et (D), et l'étape consistant à enlever le film de revêtement hydrosoluble après l'étape (D), en formant ainsi un film monomoléculaire hydrophobe sur une surface et un film monomoléculaire hydrophile sur l'autre surface.

14. Procédé selon la revendication 12, dans lequel le groupe silane réactif est un groupe chlorosilyle.

15. Procédé selon la revendication 12, dans lequel la matière tensio-active à base de silane est identique à celle définie dans la revendication 11.

16. Procédé selon la revendication 12, dans lequel la matière comportant au moins deux groupes chlorosilyle est choisie dans le groupe constitué de :
SiCl₄, SiHCl₃, SiH₂Cl₂, et Cl(SiC1₂O)ₙSiC1₃
dans lequel n est un nombre entier de 1 à 4.
